# EUROPEAN PATENT APPLICATION

(11) **EP 3 026 923 A1**
(43) Date of publication of application: **01.06.2016**
(21) Application number: 14306925.0
(22) Date of filing: 28.11.2014
(51) Int. Cl.: H04N 21/442, H04N 21/45, H04N 21/4627

(54) **Method for accessing media data and corresponding device and system**

(71) Applicant: GEMALTO SA, 92190 Meudon (FR)
(72) Inventor: Paillart, Frédéric, 13881 GEMENOS Cedex (FR); Delhoste, Fabrice, 13881 GEMENOS cedex (FR)

(57) **Abstract**

The invention relates to a method 20 for accessing media data.

According to the invention, the method comprises the following steps. A first device 12 plays 22 media data content. The first device or a second device 14 detects 26, through at least one sensor, during the media data content play, at least one emotion presented 24 by at least one individual 11, the at least one individual listening and/or viewing the played media data content. The first device, the second device or a third device cooperating with the second device, as a control device, compares 28 the at least one detected emotion to at least one predetermined reference emotion for each concerned individual. The control device decides, based upon at least one emotion comparison result, to carry out at least one action 210 or 212.

The invention also relates to corresponding device and system.

## Description

### Field of the invention:

The invention relates generally to a method for accessing media data. Furthermore, the invention also pertains to a device for accessing media data. Moreover, the invention relates to a system for accessing media data.

### State of the art:

Nowadays, there are more and more videos and/or audios that are accessible via a TeleVision (or a TV) set, a radio set, a mobile (tele)phone or any other terminal.

However, a child may access a video (data) content and/or an audio (data) content, such as a war movie, an horror movie or the like, which is able to induce the child to respond negatively, i.e. while being scared.

Thus, there is a need to provide a solution that allows controlling access to audio and/or video (data) content that is experienced by a child who is able to respond or react negatively.

### Summary of the invention:

The invention proposes a solution for solving the just herein above specified need by providing a method for accessing media data.

According to the invention, the method comprises the following steps. A first device plays media data content. The first device or a second device detects, through at least one sensor, during the media data content play, at least one emotion presented by at least one individual, the at least one individual listening and/or viewing the played media data content. The first device, the second device or a third device cooperating with the second device, as a control device, compares the at least one detected emotion to at least one predetermined reference emotion for each concerned individual. The control device decides, based upon at least one emotion comparison result, to carry out at least one action.

The principle of the invention consists in that, while a media content is played, a control device analyses whether a captured emotion of one (or several) individual(s) who experience(s) the media content is a predefined reference emotion to be tracked, for each concerned individual. In case the captured emotion is or is not a previously stored reference emotion, the control device decides to perform one or several actions.

The control device tracks thus an emotional response relating to each individual who consumes the media content and acts according to an emotion comparison result.

A tracked emotional response may be an emotional expression(s) and/or any emotional feature(s) of a body of the concerned individual.

It is noteworthy that the captured emotion and the reference emotion may be based on a static or a dynamic feature(s) of at least a part of the body of the concerned individual, like e.g. a picture or a series of pictures of a face of the concerned individual.

Since each individual interacts, i.e. exhibits an emotion, in real time with the play of the concerned media content, the control device also acts in real time.

It is to be noted that the invention does not impose any constraint with respect to the number and/or the type(s) of the predefined reference emotion(s). The reference emotion(s) may include, for each concerned individual, one or several pictures including a smile, a laugh, a fear and/or anger. Such a reference emotion(s) may be used as a reference emotion(s), expected and/or avoided.

Due to the fact that the control device assesses the captured emotion with respect to a predetermined reference emotion(s), the control device acts on the basis of a real experience relating to the concerned individual.

It is noteworthy that the invention does not impose any constraint with respect to the number and/or the type(s) of the action(s). The control device may thus carry out any number and/or any type of action(s).

The control device may rate the concerned media content based on an emotion comparison result for the concerned individual.

The control device may warn its user, other identified person(people) and/or a service provider, about a score obtained by a played media content that has been consumed by her/his child or another person(people), as individual(s). Such a score may help a media content provider, like e.g. an advertiser or a publisher, to enhance the media content, so as to increase its positive feedback and/or its audience.

For instance, if an individual(s) smile(s) or laugh(s), then the control device authorizes the individual(s) to further consume the played media content. Otherwise, i.e. if an individual(s) is(are) scared, feared or angry, the control device forbids the individual to further continue consuming the played media content.

Thus, the invention solution allows a control device user to control access to a media (data) content for its audience, as individual(s), who consume(s) the concerned media content, in a quick, efficient and convenient manner.

Moreover, the invention solution allows a control device user to control access to a media (data) content specifically for the concerned individual(s), i.e. the action(s) may be adapted to the thus surveyed individual(s).

It is to be noted that the control device may be located at the place where the individual(s) consume(s) the media content or remotely, like e.g. in a network entity, from a distant server.

According to a further aspect, the invention is a device for accessing media data.

According to the invention, the device comprises means for playing a media data content. The device is configured to detect, through at least one sensor, during a media data content play, at least one emotion presented by at least one individual, the at least one individual listening and/or viewing the played media data content. The device is configured to compare, as a control device, the at least one detected emotion to at least one predetermined reference emotion for each concerned individual. The device is configured to decide, based upon at least one emotion comparison result, to carry out at least one action.

As device for accessing media data, it may be a media player equipped with one or several sensors, like e.g. a TV set equipped with a camera, a mobile terminal or glasses equipped with a camera, a display screen and/or an earphone(s).

According to still a further aspect, the invention is a system for accessing media data.

According to the invention, the system includes a first device and a second device. The first device comprises means for playing a media data content. The second device is configured to detect, through at least one sensor, during a media data content play, at least one emotion presented by at least one individual, the at least one individual listening and/or viewing the played media data content. The second device is configured to compare, as a control device, the at least one detected emotion to at least one predetermined reference emotion for each concerned individual. The second device is configured to decide, based upon at least one emotion comparison result, to carry out at least one action.

As a second device, it may a terminal, a user terminal, a token, a Secure Element (or SE) that cooperates with a host device, such as a media player or a terminal, or a remote server.

Within the present description, an SE is a smart object that, on the one hand, protects access to data that the smart object stores and, on the other hand, is intended to communicate with the outside world.

The SE may be embedded, like e.g. an embedded Universal Integrated Circuit Card (or eUICC) 14, within a host device, such as a mobile phone, as terminal.

Instead of being embedded, an SE chip may be included within a smart card termed Subscriber Identity Module (or SIM) type card or the like, as removable from its host device.

The invention does not impose any constraint as to a kind of the SE type. As removable SE, it may be a SIM type card, a Secure Removable Module (or SRM), a smart dongle of the USB (acronym for "Universal Serial Bus") type, a (micro-) Secure Digital (or SD) type card or a Multi-Media type Card (or MMC) or any format card to be coupled to a host device, as first device.

### Brief description of the drawings:

Additional features and advantages of the invention will be more clearly understandable after reading a detailed description of one preferred embodiment of the invention, given as an indicative and non-limitative example, in conjunction with the following drawings:

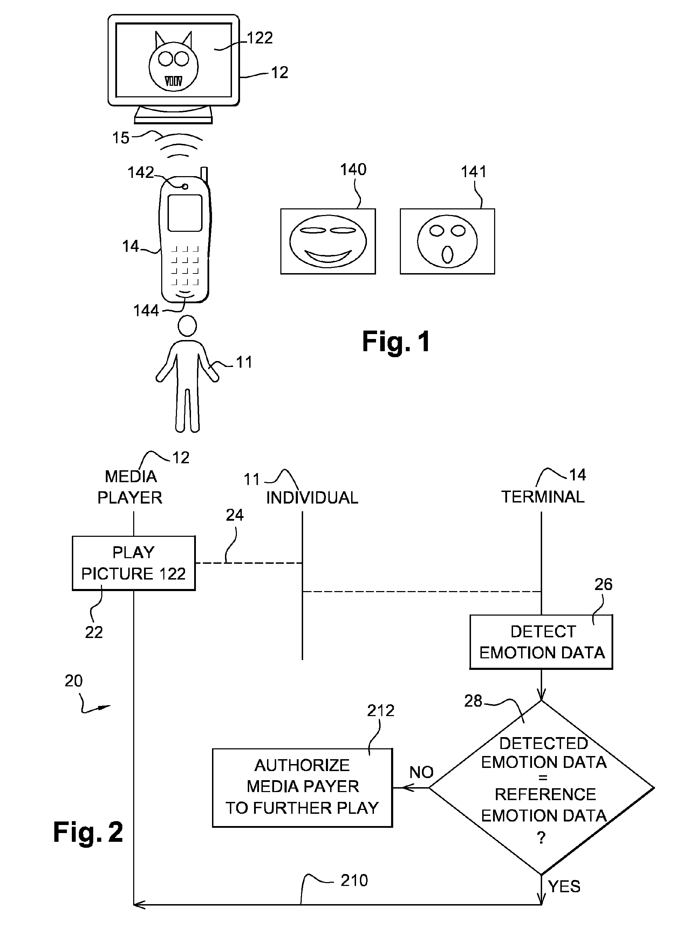

- Figure 1 illustrates a simplified diagram of a mobile phone, as one exemplary embodiment of a local control device, the mobile phone being arranged to detect an emotion relating to an individual who consumes a played media content, to compare the detected emotion to a reference emotion(s) and to decide, based on an emotion comparison result, to carry out an action(s), according to the invention; and
- Figure 2 represents an example of one message flow between a media player, the individual and the mobile phone of figure 1, so that the mobile phone authorizes or forbids the individual to further consume the played media content.

### Detailed description:

Herein under is considered a case in which the invention method for accessing media data is implemented by a TV set, as a media player and a first device, and a mobile phone, as a user terminal, a second device, a local control device and a standalone entity.

According to another embodiment, the invention method for accessing media data is implemented by a TV set, as a media player and a first device, a mobile phone, as a user terminal, and a remote server, as a third device and a remote control device. In other words, the mobile phone cooperates with the remote server, so as to decide, based on an emotion comparison result, to carry out an action(s). According to such an embodiment (not represented), the mobile phone is adapted to carry out a detection of an emotion of an individual that is described infra and that is performed by the mobile phone and the remote server is adapted to carry out a comparison of the detected emotion to a reference emotion(s) and to decide, based on an emotion comparison result, to carry out an action(s) that are described infra and that are performed by the mobile phone.

According to still another embodiment, the invention method for accessing media data is implemented by a TV set, as a media player and a first device, a mobile phone and a removable or incorporated SE, as a second device and a local control device. In other words, the SE cooperates with the mobile phone, so as to decide, based on an emotion comparison result, to carry out an action(s). According to such an embodiment (not represented), the SE is adapted to carry out the functions that are described infra and that are performed by the mobile phone.

Naturally, the herein below described embodiment is only for exemplifying purposes and is not considered to reduce the scope of the invention.

**Figure 1** shows schematically an individual 11, a TV set 12, as a media player, and a mobile telephone 14, as a user terminal.

For sake of simplicity, the TV set 12 and the mobile telephone 14 are termed herein after the TV 12 and the phone 14 respectively.

Only one individual 11 is represented. Nevertheless, the invention is also applicable to several individuals, the control device accesses, for each individual, one (or several) reference emotion(s) to be compared to each detected emotion prior to deciding, based on an emotion comparison result, to carry out one or several actions, as further explained infra.

The TV 12, as a media player, plays e.g. a film, a TV-series, a video clip, a TV show or any other media data content.

The TV 12 may be compliant with Wifi, Bluetooth and/or any other Short Range (or SR) communication technology enabled.

Alternately or additionally, the TV 12 includes an infrared receiver.

Instead of a TV, the media player may be a Personal Computer (or a PC), a game player or any other device including means for reading media data and comprising or being connected to one or several user interfaces. As user interface(s), there may be a display screen(s) and/or a loudspeaker(s), so as to let view and/or listen the concerned media content.

Within the present description, media data is audio and/or video data.

The media data may originate, possibly through a set-top box, from a remote radio or TV transmitter, as a broadcaster, a Video On Demand (or VOD) provider, an Audio and Video On Demand (or AVOD) provider or any other remote provider(s) from a server (not represented).

The media data may originate from a local Digital Video Disk (or DVD) type player, a set-top box or any other local provider (not represented) that is connected to the TV 12.

An individual 11 is sufficiently close to the TV 12, so as to watch and listen, i.e. consume or experience, a media content that is being played by the TV 12.

The phone 14 is used for surveying the individual 11 who consumes a media content and may react or respond to the media content that is being played.

The individual 11 may thus smile, laugh, be angry and/or feared once or several times from a beginning of the play of the media content.

The individual 11 may be either a phone 14 user or a person distinct from a phone user, like e.g. a relative or a parent of the individual 11 or any person who desires to survey the individual 11.

Instead of a phone, it may be a PC, a tablet or any other device including means for processing data, comprising or being connected to means for storing data, and comprising or being connected to one or several sensors for capturing or detecting an emotion of the individual 11.

The phone 14 is preferably equipped with a camera(s) 142, as one sensor for capturing each emotion that is visually expressed by the individual 11. The camera 142 allows either filming continuously or taking regularly a picture of the individual 11 who is situated in front of the camera 142 and consumes a played media content.

Instead of being equipped with a camera, the phone 14 is connected to a camera (not represented).

The camera 142 that points the individual 11 is present e.g. on the front side of the phone 14.

Alternately, the camera 142 that points the individual 11 is on the rear side of the phone 14.

The camera 142 is used for detecting an (or a plurality of) emotion(s) that the invidual 11 presents by consuming the concerned played media content. To detect an emotion of the individual 11, the camera 142 may focus on a face of the individual 11, so as to extract either statically, i.e. through a picture, or dynamically, i.e. through a series of pictures, a facial expression. The facial expression may be based on an eye(s) expression and/or a mouth expression, as an individual body feature(s).

The phone 14 may be also equipped with (or connected to) a second camera (not represented), so as to either film continuously or take regularly a picture of the media content that is being played and consumed by the individual 11 in a manner synchronized with the operation of the first camera 142. The second camera is used for recording what the individual 11 watches at the time she/he has an emotion that is captured by the first camera 142. The phone 14 is thus able to associate a captured emotion with the corresponding played media content, like e.g. a picture or a series of pictures, as an extract of the consumed played media content that allows getting an emotional expression(s) from the individual 11.

The phone 14 is preferably equipped with one (or several) microphone(s) 144, as a sensor(s) for capturing each emotion that is orally expressed by the individual 11. The microphone 144 is used for detecting a sound(s), like e.g. a laughter sound(s) and/or a cry sound(s), as an emotion(s), that the invidual 11 produces by consuming the played media content.

The phone 14 may be provided with a bracelet (not represented) and/or another wearable device, as a biometric data reader and a sensor, that is used for capturing each emotion that is expressed by a feature(s) of the individual 11. To detect an emotion of the individual 11, the biometric data reader may measure or sense a body temperature increase (associated with a fear), a ruffled fur (associated with a fear) and/or an increased heart rate (associated with a fear), as an individual body feature(s).

The phone 14 is preferably provided with wireless communication means for exchanging data with outside.

Within the present description, the adjective "wireless" denotes notably that the communication means communicates via one or several Long Range (or LR) and/or Short Range (or SR) Radio-Frequency (or RF) links.

The SR RF link may be related to a Wifi or Bluetooth type link.

Alternately or additionally, the wireless communication means includes an infrared transmitter.

The phone 14 includes one or several microprocessors (not represented), as data processing means, one or several memories (not represented), data storing means, and two or more Input/Output (or I/O) interfaces.

The phone memory(ies) may comprise one or several volatile memories and/or one or several non-volatile memories.

The phone memory stores an Operating System (or OS) and one or several applications to be executed by the phone microprocessor. The applications including the invention application are offered to the phone 14 user.

The phone memory stores preferably one (or several) predetermined picture(s) 140 that includes a laugh of the individual 11, as a reference emotion(s), that may be expected. Such a picture 140 presents, for instance, an individual 11 face that has a relatively narrow eye opening and/or a mouth that is open with lip corners that are pulled obliquely.

The phone memory may store one (or several) predetermined picture(s) that includes a smile of the individual 11, as a reference emotion(s).

The phone memory stores preferably one (or several) predetermined picture(s) 141 that includes a fear of the individual 11, as a reference emotion(s), that may be feared or avoided. Such a picture 141 presents, for instance, an individual 11 face that has a relatively large eye opening and/or a mouth that is frankly open with lip corners that are pulled vertically.

The phone memory may store one (or several) predetermined picture(s) that includes anger of the individual 11, as a reference emotion(s).

The phone memory may store data relating to a Uniform Resource Identifier (or URI), a Uniform Resource Locator (or URL) and/or an Internet Protocol (or IP) address of an external entity to be addressed, like a server, as a device that collects each detected emotion and/or a corresponding audience score.

The phone 14 may be arranged to detect that a media content is being played and/or the individual 11 is present in front of the phone 14, as an incoming event(s), so as to awake automatically the invention application to survey the concerned individual 11.

The phone 14 is configured to detect, through one or several sensors, each emotion presented by the individual 11. Then, the phone 14 records preferably each detected emotion within the phone memory.

At the time an emotion is detected, the invention application may allow recording, within the phone memory, the associated media content that is played.

The phone 14 is configured to analyse each emotion that is detected through the sensor(s) and that originates from the concerned individual 11 during a media content play.

To analyse the detected emotion, the invention application allows comparing each detected emotion to one or several pre-stored reference emotions that are accessible. Such a reference emotion(s) to be used is(are) entered, configurable and selected under the phone user control.

The invention application allows deciding, based on a result of one or several comparisons to the reference emotion(s), to carry out one or several actions.

The actions may be of different natures.

As actions, it may include an authorization or an interdiction to further play part or all of the media content that is being played.

Alternately or additionally, it may include an analysis of the result of the comparison(s) to the reference emotion(s), so as to allocate a score, as an audience score, to each of the concerned individual 11 who consumes the media content. The invention application allows recording each audience score. The invention application may allow sending each audience score to a central server. The server may thus decide, based on the received audience score, possibly further to a comparison of an average of all the received audience scores to a predetermined reference audience score, like e.g. an expected audience score, to carry out one or several actions.

The invention application may allow transmitting to an identified device(s), like e.g. a mobile phone, a message for warning its user, every time a detection of a predetermined emotion, like e.g. a fear or anger, occurs.

The invention application may allow transmitting wirelessly to an identified device, like e.g. the TV 12, a message including a command for switching off the media content that is being played and/or the TV 12 or a command for switching from a TV 12 source of the played media content to a predetermined targeted source, like e.g. a dedicated child program content provider, as a local or remote content provider, so as to stop the play of the media content.

**Figure 2** depicts an exemplary embodiment of a message flow 20 that involves the TV 12, the individual 11 and the phone 14.

It is assumed that the phone 14 user, as a parent of a child, as the individual 11, desires to either authorize or forbid the child 11 to follow a TV program, as a media content, that is being played by the TV 12.

It is assumed that only the camera 142 is used as the sensor for detecting an emotion presented or expressed by the child 11. It is clear that (an)other sensor(s) may be used for detecting an emotion. In such a case, a corresponding digital template is associated with each used sensor. For instance, a microphone is used and a pre-stored reference sound is to be tracked and the phone 14 is configured to compare each detected sound to the reference sound. Furthermore, in order to enhance the recognition of a particular reference emotion, like e.g. a fear, several sensors, like e.g. the camera 142 and the microphone 144 are used and the detected picture and the detected sound are both compared to the reference emotion picture and the reference emotion sound respectively. For each used sensor type, there is an associated digital template type.

It is further assumed that the phone 14 stores the picture 141 that includes a fear of the child 11, as a fear picture 141 and reference emotion that is negative and to be avoided. The reference emotion 141 has been either loaded into the phone 14 or acquired with the phone camera 142.

The phone 14 user launches an execution of the invention application after having placed the phone 14 between the child 11 and the TV 12, so as to observe any feedback or response of the child 11 to be surveyed.

The child 11 consumes, i.e. views and/or listens to, the TV program.

At a given time, the TV program includes a picture 122 that is frightening for the child 11, like e.g. an animal with a ferocious air and extremely big teeth.

The TV 12 plays 22 the frightening picture 122.

The played frightening picture 122, as played media content, causes 24 a fear emotional state of the child 11.

The phone 142 detects 26, through the camera 142, during the media content play, a picture of the fear emotional state of the child 11, as detected emotion data.

Optionally, part or all the emotion (data) is detected, the phone 14 sends to a remote server (not represented) part or all of the detected emotion(s).

The phone 14 compares 28 the detected picture of the fear emotional state of the child 11 to the fear picture 141, as a reference emotion data.

If the detected picture of the fear emotional state of the child 11 matches the fear picture 141, then the phone 14 decides, based on the emotion comparison result, to forbid to further play the TV program by e.g. stopping the play of the TV program. To stop the play of the TV program, the phone 14 sends wirelessly to the TV 12 a message 210 including a command for switching off the TV program that is being played and/or the TV 12 or a command for switching from a TV 12 source of the played TV program to a predetermined targeted source, like e.g. a dedicated child content provider, as a local or remote content provider.

Optionally, instead of a single detection of the fear picture 141, a predetermined threshold, like e.g. three, possibly during a predefined period of time, such as two or three minutes, is or are to be reached prior to deciding to forbid to further play the TV program by e.g. stopping the play of the TV program.

Such an interdiction of the play of the TV program prevents its audience from continuing to consume the concerned TV program with a frightening picture(s), violent picture(s), dangerous scene(s)....

Otherwise, i.e. while the detected emotion data relating to the child 11 does not match any (tracked) reference emotion data, the phone 14, as control device, authorizes 212 the TV 12, as media player, to further play part or all the TV program.

Alternately or additionally, instead of authorizing or forbidding to further play the media content, the phone 14 records, based on the emotion comparison result, an audience score relating to child 11. The phone 14 may send to a remote server (not represented) the audience score. The server may collect from a fleet of control devices, like e.g. the phone 14, an audience score for the played TV program. The server decides, based on the received audience score(s), to carry out one or several actions, like e.g. an authorization or an interdiction of a server, as the provider of the concerned media content, to further play part or all the media content.

The invention allows thus a phone user who desires to survey an individual to control access in real time to the played media content specifically for the surveyed individual. As a matter of fact, for one and the same media content, a first child may react positively while a second child may react negatively.

The invention is therefore quick, efficient, convenient for a control device user.

The embodiment that has just been described is not intended to limit the scope of the concerned invention. Other embodiments may be given. As another embodiment example, instead of having two or three separate devices that are involved, one and the same device, such as e.g. a mobile terminal, a TV or glasses, that is equipped with a media player and comprises or is connected to one or several sensors, carries out the function that is performed by the TV 12 and the functions that are performed by the phone 14 that are all described supra.

## Claims

1. A method (20) for accessing media data,
**characterized in that** the method comprises the following steps:
- a first device (12) plays (22) media data content;
- the first device or a second device (14) detects (26), through at least one sensor, during the media data content play, at least one emotion presented (24) by at least one individual (11), the at least one individual listening and/or viewing the played media data content;
- the first device, the second device or a third device cooperating with the second device, as a control device, compares (28) the at least one detected emotion to at least one predetermined reference emotion for each concerned individual;
- the control device decides, based upon at least one emotion comparison result, to carry out at least one action (210 or 212).

2. Method according to claim 1, wherein, the at least one reference emotion being associated with an authorization or an interdiction to consume the media data content, the at least one action comprises an authorization (212) or an interdiction of the first device to further play at least a part of the media data content.

3. Method according to claim 1, wherein the method further comprises a score recording step in which the control device records, based upon the at least one emotion comparison result, an audience score relating to the at least one individual.

4. Method according to claim 3, wherein the control device sends to a server the audience score and the server decides, based upon the received audience score, to carry out at least one action.

5. Method according to any previous claim, wherein the control device records the at least one detected emotion and/or the associated extract of the played media data content.

6. Method according to any previous claim, wherein the control device sends to a server at least one of the at least one detected emotion.

7. Method according to any previous claim, wherein the at least one sensor comprises at least one element of a group including:
- at least one camera (142);
- at least one microphone (144); and
- at least one biometric data reader.

8. Method according to any previous claim, wherein the at least one reference emotion comprises at least one element of a group including:
- at least one predetermined picture including a smile relating to each of the at least one individual;
- at least one predetermined picture (140) including a laugh relating to each of the at least one individual;
- at least one predetermined picture (141) including a fear relating to each of the at least one individual; and
- at least one predetermined picture including anger relating to each of the at least one individual.

9. A device for accessing media data,
**characterized in that**, the device comprising means for playing a media data content, the device is configured:
- to detect, through at least one sensor, during a media data content play, at least one emotion presented by at least one individual, the at least one individual listening and/or viewing the played media data content;
- to compare, as a control device, the at least one detected emotion to at least one predetermined reference emotion for each concerned individual;
- to decide, based upon at least one emotion comparison result, to carry out at least one action.

10. A system for accessing media data,
**characterized in that**, the system including a first device (12) and a second device (14), the first device comprising means for playing a media data content, the second device is configured:
- to detect (26), through at least one sensor (142, 144), during a media data content play, at least one emotion presented (24) by at least one individual (11), the at least one individual listening and/or viewing the played media data content;
- to compare (28), as a control device, the at least one detected emotion to at least one predetermined reference emotion for each concerned individual;
- to decide, based upon at least one emotion comparison result, to carry out at least one action (210 or 212).
